# EUROPÄISCHE PATENTSCHRIFT

(11) **EP 0 856 460 B1**
(45) Veröffentlichungstag und Bekanntmachung des Hinweises auf die Patenterteilung: **13.12.2000**
(21) Anmeldenummer: 97112807.9
(22) Anmeldetag: 25.07.1997
(51) Int. Cl.: B62K 17/00, A63B 27/00, B62M 1/00, A63J 5/12

(54) **Durch Muskelkraft angetriebenes Fahrzeug, insbesondere Fahrrad**
Vehicle propelled by muscular power, in particular bicycle
Véhicule à propulsion musculaire, en particulier une bicyclette

(30) Priorität: 04.02.1997 DE 19704101; 30.04.1997 DE 29707841 U
(43) Veröffentlichungstag der Anmeldung: 05.08.1998
(73) Patentinhaber: Schweizer, Joachim, 81739 München (DE)
(72) Erfinder: Schweizer, Joachim, 81739 München (DE)
(74) Vertreter: Becker Kurig Straus

(56) Entgegenhaltungen:
- WO-A-96/15019

## Beschreibung

Die Erfindung betrifft ein Fahrzeug, das wenigstens einen durch Muskelkraft betätigbaren Kurbeltrieb aufweist, insbesondere ein Fahrrad.

Fahrräder sind aus dem Stand der Technik in unterschiedlichen Ausführungen bekannt, wobei sie derart ausgebildet sind, daß mit ihnen nur eine Fortbewegung auf horizontalem oder geneigtem Untergrund möglich ist. Mit den bekannten Fahrrädern ist es grundsätzlich nicht möglich, sich in vertikaler Richtung förtzubewegen.

Aus der gattungsbildenden WO 96/15019 ist ein Sportgerät bekannt, das ein mit Zahnradantrieb ausgestattetes Fahrrad aufweist, das in einer lotrechten Zahnstange geführt ist. Dadurch wird eine formschlüssige Wirkverbindung geschaffen.

Der Erfindung liegt die Aufgabe zugrunde, ein Fahrzeug der eingangs genannten Art derart auszubilden, daß vertikale Fahrten vereinfacht sind.

Diese Aufgabe wird erfindungsgemäß mit den Merkmalen des Anspruchs 1 gelöst.

Durch die vorgeschlagene reib schlüssige Wirkverbindung des Kurbeltriebs des Fahrzeugs mit einem im wesentlichen vertikal verlaufenden Strang wird erreicht, daß sich das Fahrzeug entlang des Stranges in vertikaler Richtung bewegen kann. Der Strang, der von einem Seil gebildet ist, wird dabei an seinem oberen Ende an einem Fixpunkt festgelegt. Als Fixpunkt kann beispielsweise ein Gebäude, vorzugsweise ein Turm oder eine Brücke dienen. Stehen geeignete Bauwerke als Fixpunkt nicht zur Verfügung, so kann das obere Ende des Stranges auch von einem Kran gehalten werden. Der Strang hängt entweder frei von diesem Fixpunkt herab, oder er ist an seinem unteren Ende ebenfalls fixiert. Ein unten frei hängendes Seil bietet dem Fahrer den zusätzlichen Nervenkitzel, daß das Seil während seiner Fahrt pendelt, was allerdings das Fahren entsprechend erschwert. Insbesondere bei der Austragung von sportlichen Wettbewerben mit diesem Fahrzeug führt ein frei hängender Strang dazu, daß nicht nur Kraft und Ausdauer, sondern auch die Geschicklichkeit des Fahrers von Bedeutung ist. Die reibschlüssige Verbindung des Stranges mit dem Kurbeltrieb sorgt im Gegensatz zu einer Seiltrommel für ein über die gesamte Fahrt konstantes Übersetzungsverhältnis zwischen der Drehzahl des Kurbeltriebs und der Fahrtgeschwindigkeit des Fahrzeugs, da der Strang nicht aufgewickelt wird. Daher ist das Vorsehen eines Schaltgetriebes im Fahrzeug grundsätzlich entbehrlich. Ist jedoch ein Schaltgetriebe vorgesehen, so kann der Fahrer den seinen Verhältnissen entsprechenden Gang wählen und für die gesamte Fahrt beibehalten. Dies ist wichtig, da der Kurbeltrieb des Fahrzeugs während der Aufwärtsfahrt ständig hoch belastet ist, was ein Überwerfen der Fahrradkette auf einen anderen Zahnkranz und damit ein Schalten erschwert. Durch die vorgeschlagene Ausbildung des Fahrzeugs wird jedoch ein Schalten während der Fahrt überflüssig.

Die Herstellung der reibschlüssigen Verbindung mit dem Strang über einen angetriebenen Drehkörper ist besonders einfach zu realisieren, da keine Getriebe zur Umsetzung der Drehbewegung des Kurbeltriebs in andere Bewegungen erforderlich sind. Der Drehkörper kann beispielsweise direkt an der Welle des Kurbeltriebs angebracht sein, so daß ein herkömmliches Fahrrad mit geringstmöglichem Aufwand an die neue Aufgabe angepaßt werden kann. Erfindungsgemäß ist der Drehkörper aber mit dem vom Kurbeltrieb angetriebenen Hinterrad des Fahrrads kraftschlüssig verbunden, so daß die Kraftübertragung zwischen dem Kurbeltrieb und dem Drehkörper über die vorhandene Fahrradkette erfolgt. Auf diese Weise kann ein am Fahrrad vorgesehenes Schaltgetriebe und die Hinterradbremse mitbenutzt werden.

Das Vorsehen eines Schaltgetriebes bietet den Vorteil, daß das Fahrzeug leicht an die unterschiedlichen Kraft- und Gewichtsverhältnisse des Fahrers anpaßbar ist. So benötigt ein schwergewichtiger Anfänger eine relativ kleine Übersetzung, um den Strang hochfahren zu können. Demgegenüber wird ein gut trainierter Athlet eine höhere Übersetzung bevorzugen, um entsprechend schneller nach oben fahren zu können. Durch das Vorsehen des Schaltgetriebes läßt sich daher das Fahrzeug universeller einsetzen.

Eine reibschlüssige Verbindung wird vorteilhaft von einem Spill gebildet, das besonders einfach einen kontinuierlichen Seildurchlauf ermöglicht. Ein Spill ist ein Drehkörper, der zu beiden axialen Enden hin durchmessererweiternd ausgebildet ist. Der Strang läuft dabei im Bereich des sich erweiternden Durchmessers des Spills ein und umschlingt das Spill mindestens einfach, vorzugsweise zwei- bis dreifach. Die zwischen dem einlaufenden Strang und dem Spill auftretende Kraft führt zu einer Verschiebung der Strangwindungen in Richtung auf den ablaufenden Strang. Auf diese Weise ist gewährleistet, daß der Strang während der Fahrt stets die gleiche Lage zum Spill einnimmt. Dadurch wird sichergestellt, daß der Strang den Spill stets in gleicher Weise umschlingt und daher eine konstante Reibungskraft auf den Spill ausübt.

Eine besonders günstige Ausbildung des Spills wird ferner vorgeschlagen. Die unterschiedlichen Steigungswinkel der durchmessererweiternden Bereiche der Mantelfläche des Spills erlauben eine günstige Anpassung des Spills an die unterschiedlichen Belastungen bei der Aufwärts- bzw. Abwärtsfahrt. Dabei wird das Spill so angeordnet, daß der Strang bei der Aufwärtsfahrt am flacher ausgebildeten Spillende einläuft und am steiler ausgebildeten Spillende ausläuft. Bei der Abwärtsfahrt läuft der Strang demgemäß am steileren Spillende ein. Durch diese Maßnahme wird erreicht, daß die auf den Strang wirkenden Seitenverschubkräfte trotz der erheblich unterschiedlichen Strangbelastungen bei der Aufwärts- bzw. Abwärtsfahrt annähernd gleich sind.

Um ein Abwickeln des Stranges vom Spill sicher zu vermeiden, wird vorgeschlagen, am Spillende eine senkrecht zur Spillachse verlaufende Führungsfläche vorzusehen. Diese Führungsfläche kann an beiden Spillenden vorgesehen sein. Alternativ kann es jedoch ausreichen, die Führungsfläche nur an dem flacheren Ende des Spills vorzusehen. Durch die Führungsfläche wird erreicht, daß das Spill an seinen beiden Enden einen zur sicheren Seilführung ausreichenden Außendurchmesser besitzt, ohne das Spill unnötig lang ausbilden zu müssen.

Alternativ zu einem Spill kann die reibschlüssige Verbindung auch von einer Treibscheibe gebildet werden. Die Treibscheibe hält den Strang in einer umlaufenden Nut im Klemmsitz und sorgt auf diese Weise trotz des geringeren Umschlingungswinkels für eine ausreichend reibschlüssige Wirkverbindung mit dem Strang.

Für die Nut hat sich ein V-förmiger Querschnitt bewährt, da hierdurch der Strang aufgrund seiner Zugkraft gerade so tief in die Nut eindringt, daß ein ausreichender Reibschluß erzielt wird. Insbesondere hängt die Strangreibung nicht wesentlich vom Strangdurchmesser ab, so daß bei Verwendung eines dünneren Strangs keine für den Fahrer gefährliche Reduktion der Strangreibung entsteht.

Um die Strangreibung weiter zu erhöhen, ist es günstig, die umlaufende Nut in gewellter Form auszubilden. Dadurch wird der von der Treibscheibe erfaßte Strang mehrfach in axialer Richtung umgelenkt, so daß er noch stärker gegen die Nut der Treibscheibe gepreßt wird.

Eine Fixierung oder Vorspannung des unteren Endes des Stranges erhöht die Zugkraft des Stranges und dient damit der weiteren Erhöhung des Reibschlusses mit dem Strang. Damit wird einerseits die Sicherheit erhöht, andererseits kann die Anzahl der Windungen um das Spill verringert werden. Außerdem wird durch diese Maßnahme der Strang in seiner Lage stabilisiert, was ein seitliches Pendeln des Fahrzeugs mit dem Strang reduziert. Dies vereinfacht das Fahren entlang des Stranges und erfordert damit weniger Geschicklichkeit vom Fahrer.

Insbesondere, wenn die reibschlüssige Verbindung des Fahrzeugs mit dem Strang am Kurbeltrieb oder an der Hinterachse des Fahrzeugs vorgesehen ist, ergibt sich das Problem, daß im allgemeinen der Schwerpunkt von Fahrzeug und Person oberhalb des Angriffspunktes mit dem Strang zu liegen kommt. Der Fahrer befindet sich daher in einem labilen Gleichgewicht, was von ihm eine besondere Geschicklichkeit zum Halten des Gleichgewichts erfordert. Um auch in diesem Fall ein stabiles Gleichgewicht zu erzielen, wird vorgeschlagen, daß am Fahrzeug eine Führung vorgesehen ist, die sich zumindest bis oberhalb des Schwerpunkts von Fahrzeug und Person erstreckt und am Strang abgestützt ist. Das obere Ende dieser Führung bildet daher einen Stützpunkt, unterhalb dessen sich der Schwerpunkt des Systems, bestehend aus Fahrzeug und Fahrer, befindet. Das Fahrzeug befindet sich daher in einem stabilen Gleichgewicht, dessen Lage somit ohne weiteres Zutun des Fahrers nur in geringem Maße um eine Gleichgewichtslage schwankt. Vorzugsweise wird die Gleichgewichtslage derart eingestellt, daß die Verbindungslinie zwischen dem Hinterrad und dem Vorderrad des Fahrzeugs leicht schräg nach oben zeigt.

Als Führung könnte beispielsweise eine Rolle vorgesehen sein, die den Strang besonders reibungsarm erfaßt. Alternativ wird vorgeschlagen, als Führung ein Gleitteil zu verwenden, da dieses gegenüber einer Rolle einfacher herzustellen und gleichzeitig sicherer ist.

Die Ausbildung des Gleitteils als Rohr ist besonders sicher, da der Strang allseits im Rohr geführt ist und somit nicht mehr von der Führung abspringen kann. Da ein Rohr in sich stabil ist, sind im Bereich seines oberen Endes keine weiteren Haltemaßnahmen erforderlich, so daß das Rohr lediglich an seinem unteren Ende am Rahmen des Fahrzeugs festgelegt werden muß. Dies ergibt einen einfachen Aufbau des Fahrzeugs, so daß, ausgehend von einem herkömmlichen Fahrrad, nur wenige Umbaumaßnahmen erforderlich sind.

Eine gekrümmte Ausbildung des Rohres ermöglicht auf besonders einfache Weise ein Herumführen des Stranges um die Person, ohne dabei gleichzeitig eine übermäßige Reibung zwischen dem Strang und dem Rohr zu erzeugen. Zusätzlich kann das Rohr innenseitig mit einem Material mit gut gleitender Oberfläche wie beispielsweise Polytetrafluorethylen ausgekleidet sein, um die Reibung mit dem Strang noch weiter zu verringern.

Um eine Beschädigung des Stranges zu verhindern, ist das Rohr an seinem oberen Ende flexibel ausgebildet. Hierdurch kann das obere Ende des Rohres eventuelle Schaukelbewegungen des Fahrzeugs ausgleichen und damit ein Knicken des Stranges verhindern. Das flexible Endstück des Rohres wirkt dabei wie eine Kabelschutztülle, wie sie bei Steckern von Elektrokabeln bekannt sind. Ein Knikken des Stranges ist nicht nur wegen der möglichen Strangbeschädigung nachteilig, ein derartiger Knick würde auch zu einer Abbremsung der Fahrt fuhren, da sich der Strang nicht mehr sauber in das Rohr einführen läßt.

Ferner ist es vorteilhaft, am Fahrzeug eine Bremsvorrichtung vorzusehen. Befindet sich der mit dem Strang in Wirkverbindung stehende Drehkörper an einem Rad des Fahrzeugs, so kann die auf dieses Rad wirkende Betriebsbremse direkt genutzt werden. Vorzugsweise wird zur Erhöhung der Sicherheit mindestens eine weitere Bremse vorgesehen, die auf das Fahrzeugrad oder direkt auf den Strang wirkt. Diese dient der Sicherheit des Fahrers, da sie eine freie Fallbewegung verhindert, wenn beispielsweise die Betriebsbremse des Fahrzeugs ausgefallen ist. Vorzugsweise wirkt diese Bremsvorrichtung derart, daß sie ab einer vorgegebenen Fallgeschwindigkeit ein Verkeilen am Strang bewirkt und damit die Fallbewegung verzögert.

Schließlich ist es günstig, den Kurbeltrieb mit einem Freilauf oder einer Kettenabwurfeinrichtung auszustatten, um bei der Abwärtsfahrt des Fahrzeugs eine zwangsweise Drehung des Kurbeltriebs zu vermeiden. Dadurch ist die Abwärtsfahrt für den Fahrer bequemer, da dieser keine Tretbewegungen mehr ausführen muß.

Die Erfindung wird anhand der Zeichnung beispielhaft erläutert.

Es zeigt:
- Figur 1: eine Seitenansicht einer bevorzugten Ausführungsform der Erfindung,
- Figur 2: eine Schnittdarstellung durch eine Treibscheibe mit einer Umlenkrolle,
- Figur 3: eine Schnittdarstellung der Anordnung gemäß Figur 2 entlang der Schnittlinie III-III,
- Figur 4: eine alternative Ausführungsform der Treibscheibe,
- Figur 5: eine räumliche Darstellung eines Spills,
- Figur 6: eine Schnittdarstellung durch die mit einem Spill ausgerüstete Hinterachse des Fahrzeugs,
- Figur 7: eine Schnittdarstellung durch das Spill und
- Figur 8: eine Schnittdarstellung durch den Kurbeltrieb des Fahrzeugs mit einer Kettenabwurfeinrichtung.

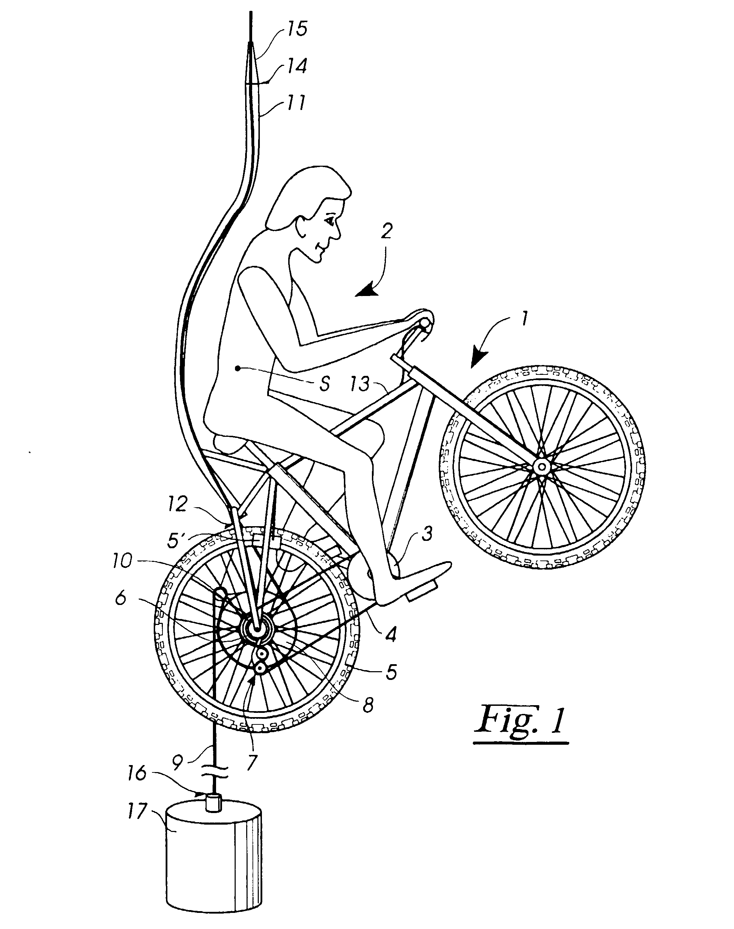

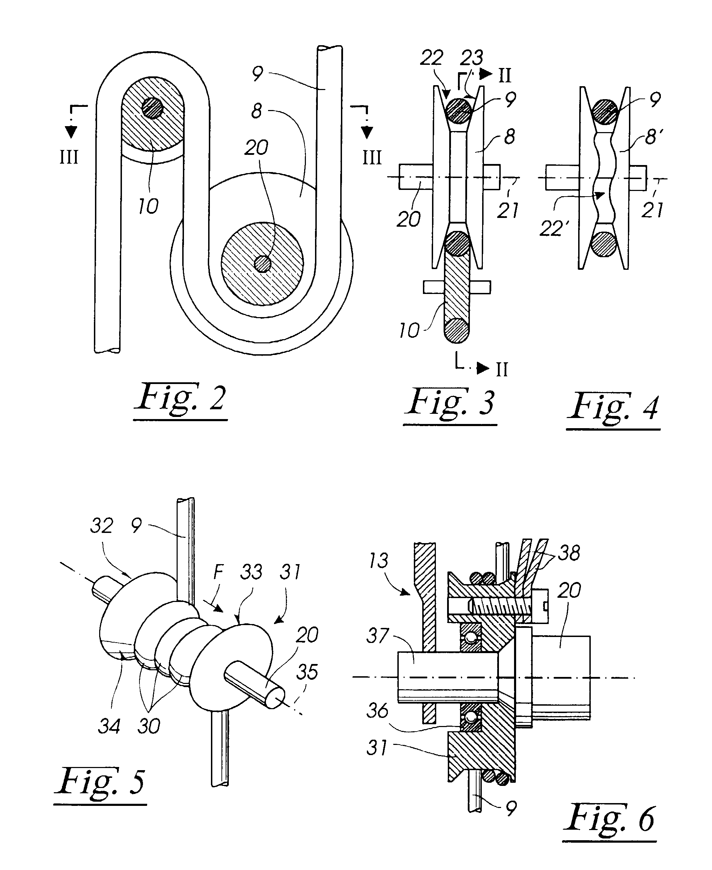

Die Figur 1 zeigt ein Fahrzeug 1 in Form eines Fahrrades mit einem Fahrer 2. Am Fahrrad 1 ist ein Kurbeltrieb 3 vorgesehen, die durch den Fahrer 2 in Drehung versetzbar ist. Die Drehbewegung des Kurbeltriebs 3 wird mittels einer Kette 4 auf ein Hinterrad 5 des Fahrrades 1 übertragen. Das Hinterrad 5 besitzt hierzu mehrere Zahnkränze 6, die ein Schaltgetriebe 7 bilden. Auf diese Weise läßt sich das Übersetzungsverhältnis zwischen der Drehzahl des Kurbeltriebs 3 und der Drehzahl des Hinterrades 5 in Stufen einstellen. Das Hinterrad 5 steht mit einer Bremse 5' in Wirkverbindung, die für eine gebremste und damit sichere Abwärtsfahrt erforderlich ist.

Am Hinterrad 5 ist eine Treibscheibe 8 festgelegt, auf die die Drehbewegung des Hinterrades 5 direkt übertragen wird. Die Treibscheibe 8 ist mit einem Strang 9 in Form eines Seiles reibschlüssig verbunden, der im wesentlichen vertikal verläuft Die Treibscheibe 8 wird vom Strang 9 im Teilbereich umschlungen, so daß der Strang 9 umgelenkt wird. Damit der nach unten führende Abschnitt des Stranges 9 wieder in etwa vertikal nach unten ausgerichtet ist, wird der Strang 9 von einer Umlenkrolle 10 umgelenkt, die wiederum am Fahrrad 1 abgestützt ist.

Um für das Fahrzeug 1 ein stabiles Gleichgewicht zu erhalten, wird der Strang 9 in einem geschnitten dargestellten Rohr 11 geführt, dessen unteres Ende 12 am Fahrzeugrahmen 13 festgelegt ist. Das Rohr 11 ist innenseitig mit einer Gleitschicht aus Polytetrafluorethylen belegt, um die Reibung mit dem Strang 9 zu verringern. Am oberen Ende 14 weist das Rohr 11 ein flexibles Endstück 15 auf, das eine Anpassung des Rohres 11 an mögliche Schaukelbewegungen des Fahrzeugs 1 ermöglicht, ohne dabei den Strang 9 zu knicken. Dadurch wird sichergestellt, daß der Strang 9 sauber in das Rohr 11 eingeführt wird. Das Rohr 11 ist derart gekrümmt ausgebildet, daß es den Strang 9 um die Person 2 herumführt, so daß sich das obere Ende 14 des Rohres 11 oberhalb des Schwerpunkts S von Fahrzeug 1 und Person 2 befindet. Dies stellt ein stabiles Gleichgewicht für das Fahrzeug 1 sicher. Das untere Ende 16 des Stranges 9 ist mittels eines Gewichtes 17 vorgespannt, um den Reibschluß zwischen dem Strang 9 und der Treibscheibe 8 zu erhöhen. Alternativ könnte der Strang 9 auch an seinem unteren Ende 16 beispielsweise durch eine Feder festgelegt werden.

Die Figuren 2 und 3 zeigen Schnittdarstellungen der Treibscheibe 8 und der Umlenkrolle 10. Die Treibscheibe 8 ist an einer Welle 20 festgelegt, deren Achse 21 mit der Achse des Hinterrads 5 des Fahrzeugs 1 zusammenfällt. Die Treibscheibe 8 weist eine V-förmige Nut 22 auf, in der der Strang 9 reibschlüssig geführt ist. Die V-förmige Nut 22 ist dabei derart schmal ausgebildet, daß der Strang 9 an den Flanken 23 der Nut 22 anliegt. Hierdurch wird erreicht, daß der Strang 9 entsprechend seinem Durchmesser gerade so tief in die Nut 22 eindringt, daß dieser an den Flanken 23 einen ausreichenden Reibschluß erzielt. Der Strang 9 umschlingt dabei die Treibscheibe 8 um 180° und wird demnach von unten nach oben umgelenkt. Diese Umlenkung des Stranges 9 wird durch die nicht angetriebene Umlenkrolle 10 durch eine weitere Umlenkung um 180° kompensiert.

Figur 4 zeigt eine alternative Ausführungsform der Treibscheibe 8'. Diese weist eine V-förmige Nut 22' auf, die in axialer Richtung gewellt ist. Hierdurch ist der Strang 9 gezwungen, sich entsprechend der Wellung der Nut 22' zu verformen. Auf diese Weise ergibt sich eine besonders feste reibschlüssige Verbindung zwischen der Treibscheibe 8' und dem Strang 9, so daß ggf. der Umschlingungswinkel zwischen beiden reduziert werden kann.

Figur 5 zeigt eine räumliche Darstellung einer weiteren Ausführungsform zur Bildung einer reibschlüssigen Verbindung mit dem Strang 9. Der Strang 9 wird dabei mit drei Windungen 30 um ein Spill 31 geschlungen, das seinerseits an der Welle 20 der Hinterachse des Fahrrads angebracht ist. Das Spill 31 ist dabei zu beiden Enden 32, 33 hin durchmessererweiternd ausgebildet, so daß der Strang 9 an einer konischen Fläche 34 des Spills 31 aufläuft. Dadurch wird erreicht, daß durch die Spannkraft des Stranges 9 eine in Richtung der Spillachse 35 wirkende Schubkraft F auf den Strang 9 ausgeübt wird. Dies ist wichtig, damit der Strang 9 während der Drehung des Spills 31 nicht über dessen Ende 32 gewickelt wird, wodurch sich die Zahl der Windungen 30 des Stranges 9 verringern würde.

Aus Figur 6 ist eine Schnittdarstellung durch das Spill 31 ersichtlich. Das Spill 31 ist an der Welle 20 des Fahrzeughinterrades 5 drehfest angebracht, so daß das Spill 31 vom Hinterrad 5 zur Drehung angetrieben ist. Das Spill 31 ist über ein Kugellager 36 an einer Stützwelle 37 gehalten, die einen Teil des Fahrzeugrahmens 13 bildet. Am Spill 31 sind auch Speichen 38 des Hinterrades 5 festgelegt.

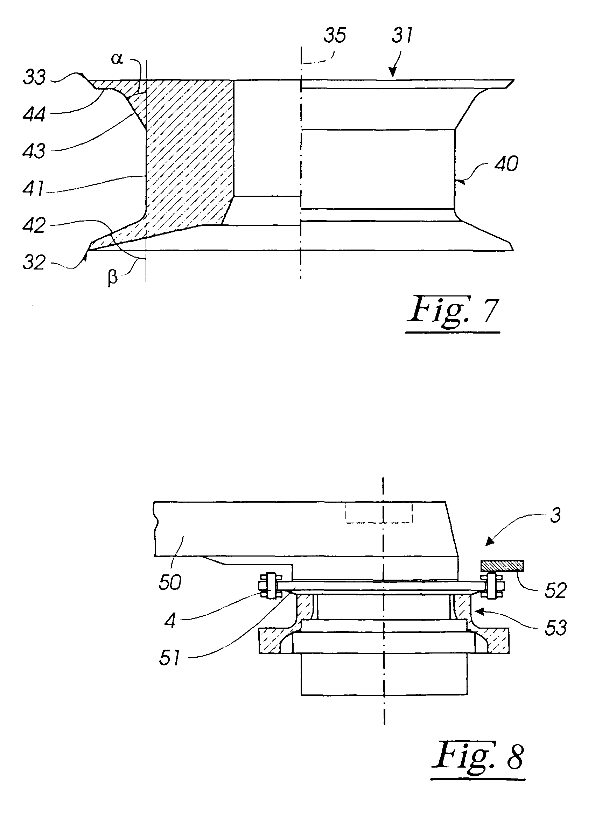

Die Form des Spills 31 ist insbesondere aus der halbgeschnittenen Darstellung gemäß Figur 7 deutlich entnehmbar. Das Spill 31 weist eine Spillmantelfläche 40 auf, deren mittlerer Bereich von einer Zylinderfläche 41 gebildet ist. Zu beiden Seiten dieser Zylinderfläche 41 erweitert sich die Spillmantelfläche 40 in ihrem Durchmesser durch Konusflächen 42, 43. Die Konusfläche 42 schließt dabei mit der Spillachse 35 einen größeren Winkel a als die gegenüberliegende Konusfläche 43 ein (Winkel β). Das Spill 31 wird dabei derart montiert, daß der Strang 9 bei der Aufwärtsfahrt an der flacheren Konusfläche 43 aufläuft, wie dies insbesondere in Figur 6 dargestellt ist. Durch diese Maßnahme wird erreicht, daß die bei der Aufwärtsfahrt des Fahrzeugs 1 wesentlich stärkere Strangbelastung ausgeglichen wird, so daß die Seitenverschubkraft F auf den Strang 9 bei der Auf- und Abwärtsfahrt in etwa gleich groß ist. Um auch bei der flacheren Konusfläche 43 einen ausreichenden Enddurchmesser des Spills 31 zur sicheren Strangführung zu gewährleisten, besitzt die Spillmantelfläche 40 am Ende der Konusfläche 43 eine senkrecht zur Spillachse 35 verlaufende Führungsfläche 44. Eine derartige Führungsfläche könnte grundsätzlich auch am Ende der gegenüberliegenden Konusfläche 42 vorgesehen sein.

Figur 8 zeigt eine teilweise geschnittene Darstellung eines Ausschnitts des Kurbeltriebs 3. Der Kurbeltrieb 3 besteht aus einer Kurbel 50, an der ein nicht dargestelltes Pedal gehalten ist. Die Kurbel 50 ist mit einem Zahnkranz 51 drehfest verbunden, der von der Kette 4 teilweise umschlungen ist. Die Kette 4 kann mittels eines Kettenspringers 52 in eine Nut 53 umgelegt werden, so daß die Wirkverbindung zwischen der Kurbel 5 und der Kette 4 aufgehoben ist. Dies gestattet ein bequemes Abwärtsfahren des Fahrzeugs 1 entlang des Stranges 9, ohne daß dabei gleichzeitig der Kurbeltrieb 3 in Drehung versetzt wird.

### Bezugszeichenliste

- 1: Fahrzeug
- 2: Fahrrad
- 3: Kurbeltrieb
- 4: Kette
- 5: Hinterrad
- 5': Bremse
- 6: Zahnkranz
- 7: Schaltgetriebe
- 8, 8': Treibscheibe
- 9: Strang
- 10: Umlenkrolle
- 11: Rohr
- 12: unteres Ende des Rohres
- 13: Fahrzeugrahmen
- 14: oberes Ende des Rohres
- 15: flexibles Endstück
- 16: unteres Ende des Stranges
- 17: Gewicht
- 20: Welle
- 21: Achse
- 22, 22': V-Nut der Treibscheibe
- 23: Flanke der Nut
- 30: Windung
- 31: Spill
- 32, 33: Ende des Spills
- 34: konische Fläche
- 35: Spillachse
- 36: Kugellager
- 37: Stützwelle
- 38: Speiche
- 40: Spillmantelfläche
- 41: Zylinderfläche
- 42, 43: Konusfläche
- 44: Führungsfläche
- 50: Kurbel
- 51: Zahnkranz
- 52: Kettenspringer
- 53: Nut
- F: Schubkraft
- S: Schwerpunkt
- α, β: Steigungswinkel der Konusfläche

## Patentansprüche

1. Fahrzeug, vorzugsweise Fahrrad, das wenigstens einen durch Muskelkraft mindestens einer Person (2) betätigbaren Kurbeltrieb (3) aufweist, wobei der Kurbeltrieb (3) mit einem im wesentlichen vertikal verlaufenden Strang (9) in Wirkverbindung steht, **dadurch gekennzeichnet, daß** der Strang (9) als Seil ausgebildet ist, daß eine reibschlüssige Verbindung von wenigstens einem vom Seil (9) wenigstens teilweise umschlungenen Drehkörper (8, 8', 31) gebildet ist, der vom Kurbeltrieb (3) in Drehung versetzbar ist und an der Welle (20) des Hinterrades (5) des Fahrzeugs (1) vorgesehen ist.

2. Fahrzeug nach Anspruch 1, **dadurch gekennzeichnet, daß** der Kurbeltrieb (3) über ein Schaltgetriebe (7) mit dem Strang (9) reibschlüssig in Wirkverbindung steht.

3. Fahrzeug nach mindestens einem der Ansprüche 1 und 2, **dadurch gekennzeichnet, daß** die reibschlüssige Verbindung von wenigstens einem vom Strang (9) mindestens einmal umschlungenen Spill (31) gebildet ist, das vom Kurbeltrieb (3) in Drehung versetzbar ist.

4. Fahrzeug nach Anspruch 3, **dadurch gekennzeichnet, daß** das Spill (31) eine Mantelfläche (40) aufweist, deren Durchmesser sich zu beiden axialen Enden (32, 33) hin mit unterschiedlichen Steigungswinkeln (α, β) erweitert.

5. Fahrzeug nach Anspruch 3 oder 4, **dadurch gekennzeichnet, daß** das Spill (31) an mindestens einem axialen Ende (33) eine senkrecht zur Spillachse (35) verlaufende Führungsfläche (44) aufweist.

6. Fahrzeug nach mindestens einem der Ansprüche 1 und 2, **dadurch gekennzeichnet, daß** die reibschlüssige Verbindung von wenigstens einer Treibscheibe (8, 8') gebildet ist, die in einer umlaufenden Nut (22, 22') den Strang (9) im Klemmsitz hält und vom Kurbeltrieb (3) in Drehung versetzbar ist.

7. Fahrzeug nach Anspruch 5 oder 6, **dadurch gekennzeichnet, daß** die umlaufende Nut (22') der Treibscheibe (8') eine sich in axialer Richtung erstreckende Wellung aufweist.

8. Fahrzeug nach mindestens einem der Ansprüche 1 bis 7, **dadurch gekennzeichnet, daß** der Strang (9) zur Erhöhung des Reibschlusses an seinem unteren Ende (16) durch ein Gewicht (17) gespannt und/oder am Boden fixiert ist.

9. Fahrzeug nach mindestens einem der Ansprüche 1 bis 8, **dadurch gekennzeichnet, daß** am Fahrzeug (1), vorzugsweise an dessen Rahmen (13) eine am Strang abgestützte Führung (11) vorgesehen ist, die sich zumindest bis oberhalb des Schwerpunkts (S) von Fahrzeug (1) und Person (2) erstreckt.

10. Fahrzeug nach Anspruch 9, **dadurch gekennzeichnet, daß** die Führung (11) als Gleitteil ausgebildet ist, das den Strang (9) erfaßt.

11. Fahrzeug nach Anspruch 9 und 10, **dadurch gekennzeichnet, daß** die Führung (11) von einem am Fahrzeug (1) festgelegten, bis über den Schwerpunkt (S) von Fahrzeug (1) und Person (2) reichenden Rohr gebildet ist, in dem der Strang (9) gleitend geführt ist.

12. Fahrzeug nach Anspruch 11, **dadurch gekennzeichnet, daß** das Rohr (11) gekrümmt ausgebildet ist und den Strang (9) bis oberhalb der Person (2) um diese herumführt.

13. Fahrzeug nach Anspruch 11 oder 12, **dadurch gekennzeichnet, daß** das Rohr (11) an seinem oberen Ende (14) flexibel ausgebildet ist.

14. Fahrzeug nach mindestens einem der Ansprüche 1 bis 13, **dadurch gekennzeichnet, daß** der Strang (9) mit einer am Fahrzeug (1) vorgesehenen, eine Fallbewegung des Fahrzeugs (1) verzögernden Bremsvorrichtung (5') in Wirkverbindung steht.

15. Fahrzeug nach mindestens einem der Ansprüche 1 bis 14, **dadurch gekennzeichnet, daß** der Kurbeltrieb (3) mit einem Freilauf oder einer Kettenabwurfeinrichtung (52, 53) ausgestattet ist.

## Claims

1. A vehicle, preferably a bicycle, having at least one crank mechanism (3) powered by muscular force of at least one person (2), said crank mechanism (3) being in active connection with an essentially vertically extending strand (9), **characterized in that** said strand (9) is a rope, that an active friction gripping connection is formed by at least one rotary element (8, 8', 31), at least partially looped by said strand (9), said rotary element being rotatable by said crank mechanism (3) and being provided on the shaft (20) of the rear wheel (5) of said vehicle (1).

2. A vehicle according to claim 1, **characterized in that** said crank mechanism (3) is in active friction gripping connection with the strand (9) by a speed gear (7).

3. A vehicle according to at least one of the claims 1 and 2, **characterized in that** the active friction gripping connection is formed by at least one capstan (31) looped at least once by the strand (9) and rotatable by the crank mechanism (3).

4. A vehicle according to claim 3, **characterized in that** the capstan (31) has a jacket surface (40), whose diameter widens at different angles of inclination (α, β) towards both axial ends (32, 33).

5. A vehicle according to claim 3 or 4, **characterized in that** the capstan (31) has, at least at one axial end (33), a guiding surface (44) extending perpendicular to the capstan axis (35).

6. A vehicle according to at least one of the claims 1 and 2, **characterized in that** the active friction gripping connection is formed by at least one driving disk (8, 8') that is fixing the strand (9) in a circumferential groove (22, 22') by press fit and is rotatable by the crank mechanism (3).

7. A vehicle according to claim 5 or 6, **characterized in that** the circumferential groove (22') of the driving disk (8') has an in an axial direction extending corrugation.

8. A vehicle according to at least one of the claims 1 to 7, **characterized in that** the strand (9) is biased at its lower end (16) by a weight (17) and/or is fixed to the ground, for increasing the friction gripping.

9. A vehicle according to at least one of the claims 1 to 8, **characterized in that** a guide (11) is provided on the vehicle (1), preferably on its frame (13), said guide being supported on the strand and extending at least above the center of gravity (S) of said vehicle (1) and the person (2).

10. A vehicle according to claim 9, **characterized in that** the guide (11) is a sliding part seizing the strand (9).

11. A vehicle according to claim 9 and 10, **characterized in that** the guide (11) is formed by a tube, wherein the strand (9) is glidingly guided, said tube being arranged on the vehicle (1) and extending at least above the center of gravity (S) of said vehicle (1) and the person (2).

12. A vehicle according to claim 11, **characterized in that** the tube (11) is curved and guides the strand (9) around and above the person (2).

13. A vehicle according to claim 11 or 12, **characterized in that** the tube (11) is flexible at its upper end (14).

14. A vehicle according to at least one of the claims 1 to 13, **characterized in that** the strand (9) is in active connection with a braking device (5') provided on the vehicle (1) and retarding the falling motion of said vehicle (1).

15. A vehicle according to at least one of the claims 1 to 14, **characterized in that** the crank mechanism (3) is equipped with an idling or a chain derailleur device (52, 53).

## Revendications

1. Véhicule, en particulier bicyclette qui présente au moins un système d'actionnement à pédalier (3) pouvant être entraîné par la force musculaire d'au moins une personne (2), le système d'actionnement à pédalier (3) étant en liaison effective avec une corde (9) s'étendant sensiblement verticalement, caractérisé en ce que la corde (9) est un câble, en ce qu'une liaison d'entraînement par friction est formée par au moins un corps tournant (8, 8', 31) au moins partiellement entouré du câble (9), corps tournant qui peut être mise en rotation par le système d'actionnement à pédalier (3) et est prévu sur l'axe (20) de la roue arrière (5) du véhicule (1).

2. Véhicule selon la revendication 1, caractérisé en ce que le système d'actionnement à pédalier (3) est en liaison d'entraînement par friction avec la corde (9) par l'intermédiaire d'un changement de vitesse (7).

3. Véhicule selon au moins une des revendications 1 et 2, caractérisé en ce que la liaison d'entraînement par friction est formée d'au moins une bobine (31) pouvant être mise en rotation par le système d'actionnement à pédalier (3), sur laquelle est enroulé sur au moins un tour la corde (9).

4. Véhicule selon la revendication 3, caractérisé en ce que la bobine (31) présente une surface extérieure (40) dont le diamètre s'agrandit vers les deux extrémités axiales (32, 33) avec des angles d'inclinaison (α, β) différents.

5. Véhicule selon la revendication 3 ou 4, caractérisé en ce que la bobine (31) présente à au moins une extrémité axiale (33) une surface de guidage (44) s'étendant perpendiculairement à l'axe (35) de la bobine.

6. Véhicule selon au moins une des revendications 1 et 2, caractérisé en ce que la liaison d'entraînement par friction est formée d'au moins une poulie d'entraînement (8, 8') qui maintient la corde (9) en position de coincement dans une gorge périphérique (22, 22') et peut être mise en rotation par le système d'actionnement à pédalier (3).

7. Véhicule selon la revendication 5 ou 6, caractérisé en ce que la gorge périphérique (22') de la poulie d'entraînement (8') présente une ondulation s'étendant dans la direction axiale.

8. Véhicule selon au moins une des revendications 1 à 7, caractérisé en ce que la corde (9) est mise sous tension par un poids (17) et / ou fixée au sol à son extrémité inférieure (16) pour augmenter la liaison d'entraînement par friction.

9. Véhicule selon au moins une des revendications 1 à 8, caractérisé en ce qu'un guide (11) s'appuyant sur la corde et s'étendant au moins jusqu'au dessus du centre de gravité (S) du véhicule (1) et de la personne (2) est prévu sur le véhicule, de préférence sur le cadre (13) de celui-ci.

10. Véhicule selon la revendication 9, caractérisé en ce que le guide (11) est une pièce coulissante qui entoure la corde (9).

11. Véhicule selon la revendication 9 ou 10, caractérisé en ce que le guide (11) est formé d'un tube fixé au véhicule (1) s'étendant jusqu'au dessus du centre de gravité (S) du véhicule (1) et de la personne (2), dans lequel la corde (9) est guidée par coulissement.

12. Véhicule selon la revendication 11, caractérisé en ce que le tube (11) est courbé et fait contourner à la corde (9) la personne (2) jusqu'au dessus de celle-ci.

13. Véhicule selon la revendication 11 ou 12, caractérisé en ce que le tube (11) est souple à son extrémité supérieure (14).

14. Véhicule selon au moins une des revendications 1 à 13, caractérisé en ce que la corde (9) est en liaison effective avec un dispositif de freinage (5') ralentissant un mouvement de chute du véhicule (1), prévu sur le véhicule (1).

15. Véhicule selon au moins une des revendications 1 à 14, caractérisé en ce que le système d'actionnement à pédalier (3) est équipé d'un dispositif à roue libre ou d'un dispositif de libération de chaîne (52, 53).
